# FASCICULE DE BREVET EUROPEEN

(11) **EP 4 072 281 B1**
(45) Date de publication et mention de la délivrance du brevet: **24.04.2024**
(21) Numéro de dépôt: 20820570.8
(22) Date de dépôt: 09.12.2020
(51) Int. Cl.: A01K 27/00

(54) **HARNAIS POUR CHIEN AVEC LAISSE RETRACTABLE**
HUNDEGESCHIRR MIT EINZIEHBARER LEINE
DOG HARNESS WITH RETRACTABLE LEASH

(30) Priorité: 09.12.2019 FR 1913949
(43) Date de publication de la demande: 19.10.2022
(73) Titulaire: Ballais, Julien, 21200 Beaune (FR)
(72) Inventeur: Ballais, Julien, 21200 Beaune (FR)
(74) Mandataire: Alatis
(86) Numéro de dépôt international: PCT/IB2020/061696
(87) Numéro de publication internationale: WO 2021/116936

(56) Documents cités:
- DE-U1-202012 011 729
- US-A1- 2013 276 717
- US-A1- 2016 270 373
- US-B1- 8 342 137

## Description

La présente invention concerne un dispositif de harnais pour chien assemblé à un système rotatif de laisse rétractable intégrée et pourvue d'un frein de traction automatique.

Traditionnellement, on tient les chiens via 2 éléments distincts : un collier ou un harnais, porté par le chien, et une laisse indépendante, simple ou à enrouleur, qui vient se fixer à un anneau cousu sur l'accessoire porté par le canidé. Par défaut, cela nécessite donc les 2 mains pour pouvoir maintenir le chien/l'anneau d'arrimage et le crochet/mousqueton à placer, mais également de stopper la marche avec le chien pendant plusieurs secondes, et de s'abaisser le temps de l'opération.

Cela n'est pas en faveur du confort d'utilisation tant pour le maître que pour l'animal. Le désagrément est également présent lors du transport en voiture : à l'ouverture de la portière, l'animal n'est pas immédiatement attaché ce qui induit différents risques.

Concernant les laisses rétractables couramment utilisées, elles manquent de sécurité en ne retenant pas automatiquement le chien s'il accélère brusquement, car le mécanisme de blocage ne s'active que par une pression sur un bouton de la part du maître.

Enfin, lorsque le chien est libéré, systématiquement le maître doit tenir la laisse en main ou la ranger en poche/sac, ce qui est encombrant et peu confortable, lors de longues marches ou d'activité sportive.

De manière générale, ce n'est pas la plus efficiente des manières de promener son chien alors que le but recherché est la praticité et la liberté d'utilisation, ainsi que la réactivité de maintien dans le cas où l'on croise un autre individu ou animal, ou bien encore dans le cas de la pratique sportive telles que la course à pied.

Après une recherche de concepts similaires à la présente invention, on peut considérer qu'il existe actuellement 4 brevets américains en cours de validité, décrivant des dispositifs se rapprochant en ce qu'un harnais ou un collier est relié à une laisse en un système unique, qui se rétracte dans un enrouleur.

Le brevet américain n° US20190208748A1 décrit une laisse à enrouleur rétractable, intégrée à l'intérieur du collier et/ou dans l'anse de la laisse.

Le brevet américain n° US20110174238A1 décrit une laisse à enrouleur rétractable, également directement intégrée dans le collier.

Le brevet américain n° US2008072846A1 décrit une laisse à enrouleur rétractable, intégrée dans un boitier fixé sur le dos du chien.

Le brevet américain n° US2013247838A1 décrit une laisse à enrouleur rétractable, intégrée dans un support plastique à sangler sur un collier ou un harnais.

Le brevet américain US2016/270373A1 décrit un dispositif conforme au préambule de la revendication 1 de la présente invention, qui présente l'inconvénient de ne pas sécuriser la fixation du boîtier d'enrouleur de laisse sur le harnais.

Ces 5 concepts décrivent une manière d'intégrer une laisse rétractable à un point d'accroche sur le canidé, mais comportent certains inconvénients.

La présente invention apporte différentes évolutions techniques et une meilleure efficience d'utilisation générale.

En effet, dans la présente invention définie par la revendication 1, le boitier enrouleur qui contient la laisse, est rotatif à 360°. C'est-à-dire qu'en plus d'enrouler la laisse dans son intérieur, le boitier est fixé sur un support rotatif et pivote à l'infini sur lui-même, au gré des mouvements naturels et des changements de direction spontanés du chien ou du maître. Cela limite les frottements de la laisse sur l'orifice du boitier et améliore donc la résistance et la durée du vie du produit, mais surtout les frottements intempestifs sur la peau du chien ce qui peut provoquer des irritations à long terme. Ce principe permet aussi de limiter les mouvements parasites, et donc de préserver le dos et les membres du chien, en améliorant l'équilibre de confort maître/animal.

De plus, le mécanisme intérieur de l'enrouleur est doté d'un système de frein autobloquant qui stoppe le déroulement de la laisse en cas d'accélération inopinée du chien, ce qui prolonge la résistance de la laisse mais permet aussi une sécurité et un contrôle accru sur le canidé. Le système est identique à celui d'une ceinture de sécurité. Il constitue également un moyen ludique et logique d'éducation à la marche, en bridant instantanément le chien qui tirera et lui apprend instinctivement le lien entre traction abusive et blocage.

Par ailleurs, contrairement aux solutions où celui-ci est placé dans le collier, le boîtier enrouleur est fixé sur la partie dorsale basse du harnais, ce qui optimise le confort de port et la sécurité de l'animal en limitant risque d'étranglement.

De plus, le système de laisse/enrouleur est distinctement visible sur la partie dorsale du harnais et apporte de ce fait un design unique et novateur. Cela permettra différentes formes de personnalisation du boitier, par de l'impression directe sur le « capot » mais aussi des housses en néoprène adaptée autour du dispositif. Sur ce boitier, nous pouvons également apposer une bande lumineuse à LED pour augmenter la visibilité de l'animal au cours de sorties nocturnes.

Enfin, le dispositif selon l'invention permet de sécuriser la fixation du boîtier d'enrouleur de laisse sur le harnais.

Le dispositif selon l'invention permet de remédier aux inconvénients des systèmes existants et, de manière générale, de rendre l'utilisation quotidienne du duo harnais/laisse bien plus fonctionnel qu'auparavant en procurant une utilisation simple, logique et instantanée.

L'ensemble du dispositif forme un système compact, tout en un, composé de 4 pièces principales.

Les dessins annexés illustrent l'invention :

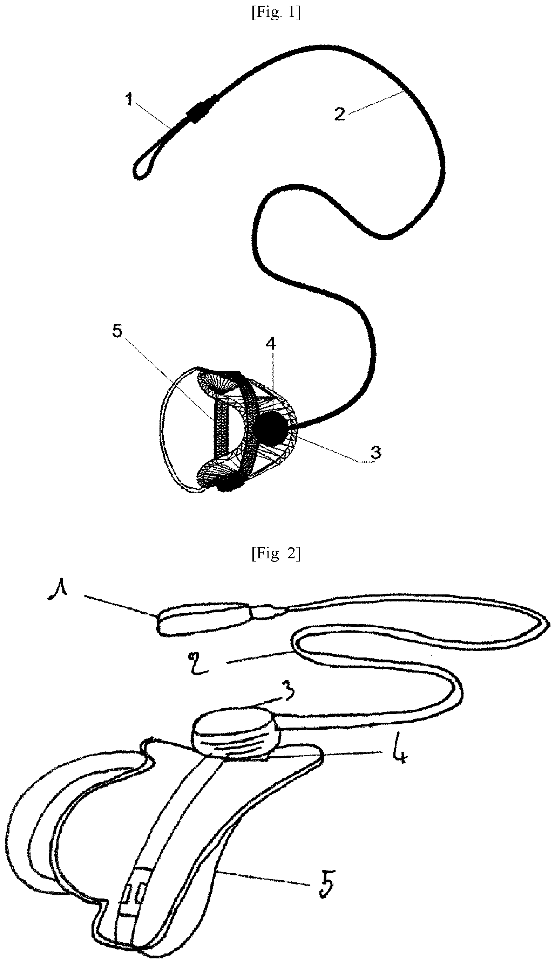

La [fig 1] représente le dispositif complet, en vue dorsale en plan schématique.
La [fig 2] représente le dispositif complet, en vue perspective.

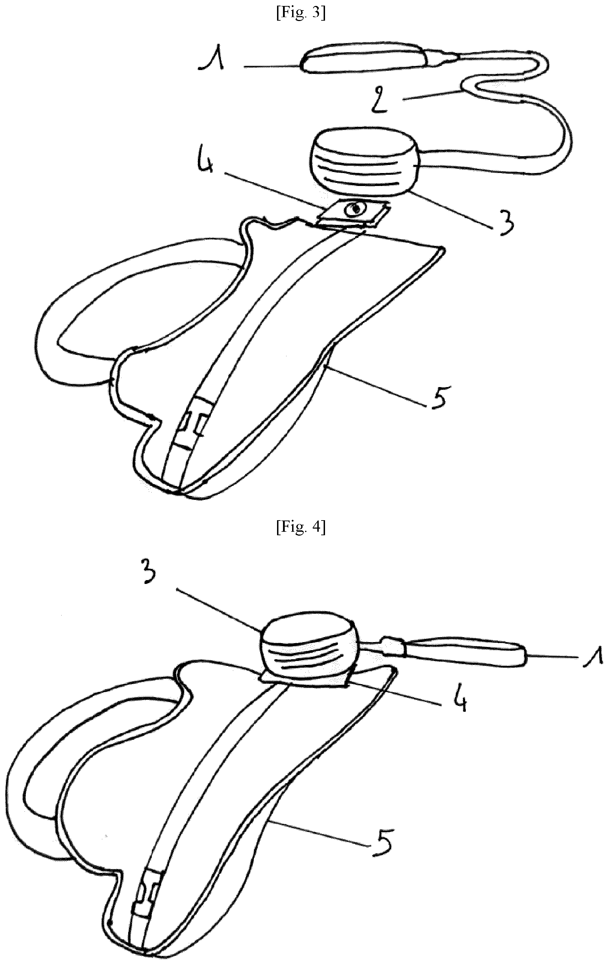

La [fig 3] représente le détail d'assemblage du dispositif, en vue perspective.
La [fig 4] représente le dispositif complet, laisse rétractée, en vue perspective.
La [fig 5] représente en perspective une variante détachable du boîtier du dispositif selon l'invention, en position détachée.
La [fig 6] représente en perspective une platine de fixation de ce boîtier.
La [fig 7] représente cette variante détachable en perspective, en position attachée.
La [fig 8] représente cette variante détachable en perspective sous un autre angle, en position attachée. En référence à ces dessins, le dispositif selon l'invention comporte selon une première caractéristique une laisse (2) réalisée en cordage de type nylon renforcé, à l'extrémité de laquelle se trouve une anse (1) de prise en main en Nylon/Néoprène. Cette anse (1) peut être pourvue d'un petit aimant sur sa partie inférieure, afin d'être solidaire du harnais (5) et stabilisée en position rétractée lors des mouvements du chien. L'anse (1) peut aussi rester « flottante » sur le dos du chien.

Le dispositif selon l'invention comporte selon une deuxième caractéristique un boîtier enrouleur (3) constitué d'un mécanisme autobloquant en acier inoxydable, d'un ressort feuillard plat qui produit le mouvement de rétractation et d'un habillage moulé en polymère ABS. Le boitier enrouleur (3) possède un « capot » sur sa partie inférieure, sur laquelle il est possible d'imprimer dans un but de personnalisation. Dans une autre variante, il est possible de fixer un collier de LED autour du boitier enrouleur (3).

Le dispositif selon l'invention comporte selon une troisième caractéristique un système rotatif à 360° (4), idéalement constitué d'un roulement à billes serti entre deux platines métalliques, occupant le rôle de fixation entre le boitier enrouleur (3) et le harnais (5). La partie inférieure du boitier (3) est directement fixée à la partie supérieure du système rotatif (4). La partie inférieure du système rotatif (4) est vissée ou cousue sur la partie dorsale du harnais (5) et joue le rôle de lien entre le harnais (5) et l'enrouleur (3) de laisse (2). Une autre variante du système rotatif peut-être constituée d'une tige cylindrique vissée directement sur le boitier (3) en sa partie supérieure et ayant sa partie inférieure qui traverse un orifice situé dans une plaque métallique fixée sur le dos du harnais (5).

Le dispositif selon l'invention comporte selon une quatrième caractéristique un harnais (5) constitué de nylon ou de cuir spécialement conçu et renforcé pour accueillir le système sur sa partie dorsale. La fixation du dispositif enrouleur (3) (4) peut être réalisée par vissage ou par coutures renforcées au harnais (5).

Assemblées entre elles tel que décrit dans les trois paragraphes suivants, ces pièces forment le système complet et constituent l'invention susceptible d'application industrielle car elle propose une utilisation efficiente et améliore nettement le confort et la sécurité autant pour l'animal que pour le maître.

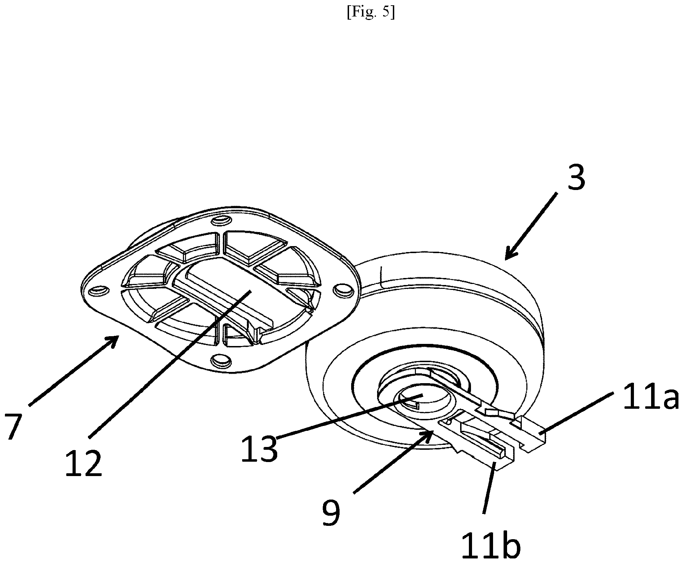

On a représenté sur les figures 5 à 8 un système selon l'invention permettant de relier de manière amovible le boîtier 3 au harnais 5.

Ce système comprend d'une part une platine 7 pouvant être cousue, vissée ou rivetée sur le harnais 5, et d'autre part un support 9 pouvant être encliqueté par coulissement à l'intérieur de la platine 7.

Ce support 9 comporte deux bras 11a, 11b qui, lorsqu'ils sont pincés l'un contre l'autre par les doigts d'un opérateur, permettent d'extraire ce support par coulissement à l'intérieur d'un logement correspondant 12 formé dans la platine 7.

Sur ce support 9 est monté un axe 13 sur lequel le boîtier 3 est lui-même monté rotatif, par exemple avec des moyens de roulement à billes ou analogues.

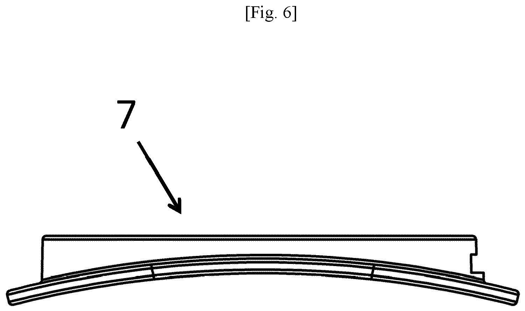

De manière avantageuse, comme cela a représenté sur la figure 6, la platine 7 présente une forme courbe, de manière à épouser la forme du dos du chien.

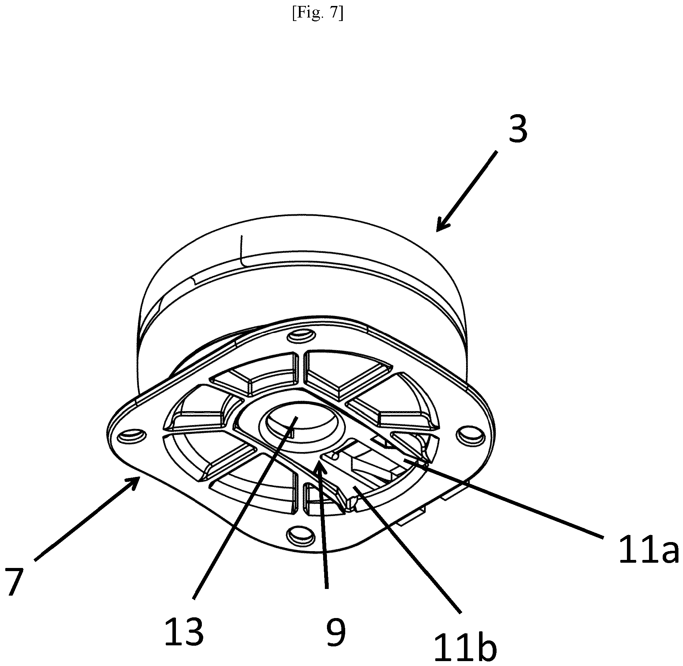

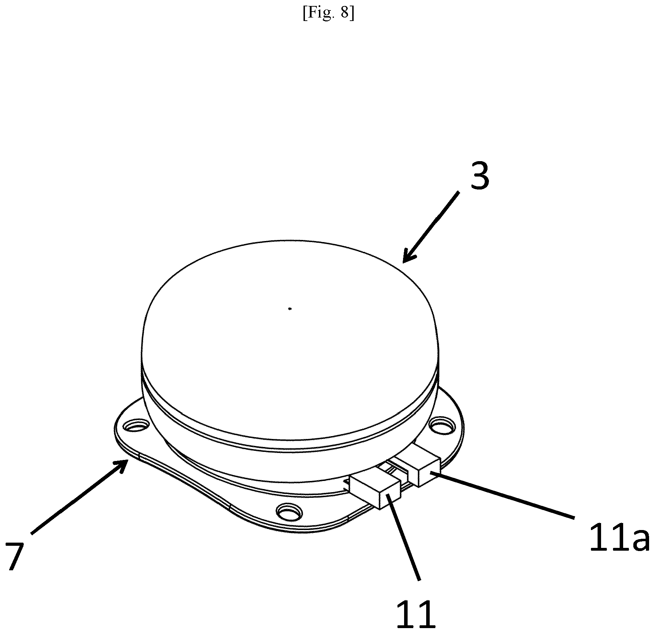

Sur la figure 5, on a représenté le boîtier 3 avec son support 9 détaché de la platine 7, et sur les figures 7 et 8, on a représenté ces deux ensembles encliquetés l'un dans l'autre.

Ce dispositif détachable permet de libérer le chien du poids du boîtier 3 lorsqu'on souhaite lui donner sa complète liberté, lui permettant ainsi de courir sans surpoids sur le dos.

Dès qu'on souhaite à nouveau contrôler le chien, par exemple de retour après une promenade en milieu urbain, on vient encliqueter le support 9 à l'intérieur du logement 12 de la platine 7, et on reprend en main l'anse 1 de la laisse 2.

## Revendications

1. Dispositif de harnais pour chien à laisse rétractable intégrée comprenant un boitier (3) contenant un système enrouleur et une laisse (2) rétractable à l'intérieur de ce boîtier, ce boîtier étant monté rotatif à 360° sur la partie dorsale du harnais (5),
des moyens de fixation dudit boîtier (3) audit harnais (5) comprenant une platine (7) fixée sur ledit harnais, un support (9) relié de manière amovible à ladite platine (7), encliquetable par coulissement à l'intérieur de ladite platine (7), et un système rotatif (13) interposé entre ledit support (9) et ledit boîtier (3),
**caractérisé en ce que** ledit support (9) comporte deux bras (11a, 11b) qui, lorsqu'ils sont pincés l'un contre l'autre par les doigts d'un opérateur, permettent d'extraire ce support (9) par coulissement à l'intérieur d'un logement correspondant (12) formé dans la platine (7).

2. Dispositif selon la revendication 1, dans lequel le système rotatif à 360° (4) comprend un assemblage de roulement à billes et de platines métalliques.

3. Dispositif selon l'une des revendications 1 ou 2, dans lequel le système enrouleur est équipé d'un frein de traction automatique.

4. Dispositif selon l'une quelconque des revendications précédentes, dans lequel l'anse (1) de la laisse (2) est flottante ou aimantée en position rétractée.

5. Dispositif selon l'une quelconque des revendications précédentes, comprenant un collier de LED autour du boîtier (3).

6. Dispositif selon l'une quelconque des revendications précédentes, dans lequel le boîtier (3) et son système rotatif (4) sont fixés par vissage ou par coutures renforcées sur le harnais (5).

7. Dispositif selon l'une quelconque des revendications précédentes, dans lequel ladite platine (7) présente une forme courbe.

## Patentansprüche

1. Hundegeschirrvorrichtung mit integrierter einziehbarer Leine, umfassend ein Gehäuse (3), das ein Aufrollsystem und eine einziehbare Leine (2) im Inneren des Gehäuses enthält, wobei dieses Gehäuse um 360° drehbar am Rückenteil des Geschirrs (5) montiert ist,
ein Befestigungsmittel für das Gehäuses (3) am Geschirr (5), das eine am Geschirr befestigte Platte (7) umfasst, eine Halterung (9), die lösbar mit der Platte (7) verbunden ist und durch das Verschieben im Inneren der Platte (7) einrasten kann, und ein Drehsystem (13), das zwischen der Halterung (9) und dem Gehäuse (3) eingefügt ist,
**dadurch gekennzeichnet, dass** die Halterung (9) zwei Arme (11a, 11b) aufweist, die, wenn der Bediener sie mit den Fingern gegeneinander drückt, das Entfernen der Halterung (9) durch das Verschieben im Inneren einer entsprechenden Aufnahme (12), die in der Platte (7) ausgebildet ist, ermöglicht.

2. Vorrichtung nach Anspruch 1, bei der das 360°-Drehsystem (4) eine Anordnung aus Kugellagern und Metallplatten umfasst.

3. Vorrichtung nach einem der Ansprüche 1 oder 2, bei der das Aufrollsystem mit einer automatischen Traktionsbremse ausgestattet ist.

4. Vorrichtung nach einem der vorhergehenden Ansprüche, bei der der Griff (1) der Leine (2) in der eingezogenen Position schwebend oder magnetisiert ist.

5. Vorrichtung nach einem der vorhergehenden Ansprüche, die eine LED-Kette um das Gehäuse (3) herum umfasst.

6. Vorrichtung nach einem der vorhergehenden Ansprüche, bei der das Gehäuse (3) und sein Drehsystem (4) durch Schrauben oder durch verstärkte Nähte am Geschirr (5) befestigt sind.

7. Vorrichtung nach einem der vorhergehenden Ansprüche, bei der die Platte (7) eine gebogene Form aufweist.

## Claims

1. Harness device for dogs with an integrated retractable lead comprising a casing (3) containing a winding system and a lead (2) that can be retracted inside this casing, this casing being mounted so as to rotate 360° on the back part of the harness (5), means for fixing said casing (3) to said harness (5) comprising a plate (7) fixed to said harness, a support (9) removably connected to said plate (7), which can be snap-fastened by sliding inside said plate (7), and a rotary system (13) interposed between said support (9) and said casing (3), **characterized in that** said support (9) has two arms (11a, 11b), which, when they are pinched together by the fingers of an operator, allow this support (9) to be extracted by sliding inside a corresponding housing (12) formed in the plate (7).

2. Device according to Claim 1, wherein the 360° rotary system (4) comprises an assembly of ball bearings and metal plates.

3. Device according to either one of Claims 1 or 2, wherein the winding system is fitted with an automatic traction brake.

4. Device according to any one of the preceding claims, wherein the handle (1) of the lead (2) is floating or magnetized in the retracted position.

5. Device according to any one of the preceding claims, comprising an LED collar around the casing (3).

6. Device according to any one of the preceding claims, wherein the housing (3) and its rotary system (4) are fixed to the harness (5) by screws or reinforced seams.

7. Device according to any one of the preceding claims, wherein said plate (7) has a curved shape.
